# EUROPEAN PATENT SPECIFICATION

(11) **EP 2 148 541 B1**
(45) Date of publication and mention of the grant of the patent: **07.09.2011**
(21) Application number: 08290713.0
(22) Date of filing: 21.07.2008
(51) Int. Cl.: H04W 76/04

(54) **Method for switching a client terminal from an idle mode to an active mode**
Verfahren zum Umschalten eines Kundenendgeräts aus einem Ruhemodus in einen aktiven Modus
Procédé de commutation d'un terminal client d'un mode inactif à un mode actif

(43) Date of publication of application: 27.01.2010
(73) Proprietor: Alcatel Lucent, 75008 Paris (FR)
(72) Inventor: Conte, Alberto, 94230 Cachan (FR); de Juan Huarte, Federico, 75014 Paris (FR)
(74) Representative: Nicolle, Olivier

(56) References cited:
- EP-A- 1 742 425
- US-A1- 2006 268 796
- US-B1- 6 978 149

## Description

The invention relates to a method for switching a client terminal from an idle mode to an active mode when a provider sends a stream to said terminal through a network, following policies based on information attached to said stream by said provider.

Currently, terminals require a consistent battery lifetime, especially when they are wireless. For example, mobile phones now have many features such as a large screen, camera, games, tactile key or MP3 player, which reduce the autonomy of their battery.

Moreover, when a mobile phone receives a voice call, a spam, a short message service or a video, it switches from an idle mode to an active mode which uses more battery.

The well-known state is the idle mode, where a terminal switches to a low consumption mode. A terminal in an idle mode is switched into an active mode by any type of stream, whatever the provider which sent it following policies applied unilaterally by the receiving network.

Document US-6 978 149 describes a transceiver which keeps circuitry associated with a receiver in a powered down state during periods when a Received Signal Strength Indicator (RSSI) indicates that a signal being received is below a predetermined threshold level, and which begins to power up the transmitter as soon as it is determined that a packet being received requires a response.

Another solution exists which introduces a notion of selective active mode procedure. In such case, the terminal is switched into an active mode only by streams sent by a specific provider. For instance, a voice call may trigger the active mode procedure but an internet message can not. Anyway, the policies are applied unilaterally by the receiving network.

It is an object of the present invention to provide, in particular, a method for switching a client terminal from an idle mode to an active mode, by means of recognition by the network of information attached to any stream by any provider in order to optimize the power consumption of its battery.

For that purpose and according to a first aspect, the invention relates to a method according to claim 1.

The invention will be best understood from the following description when read in conjunction with the accompanying drawing.

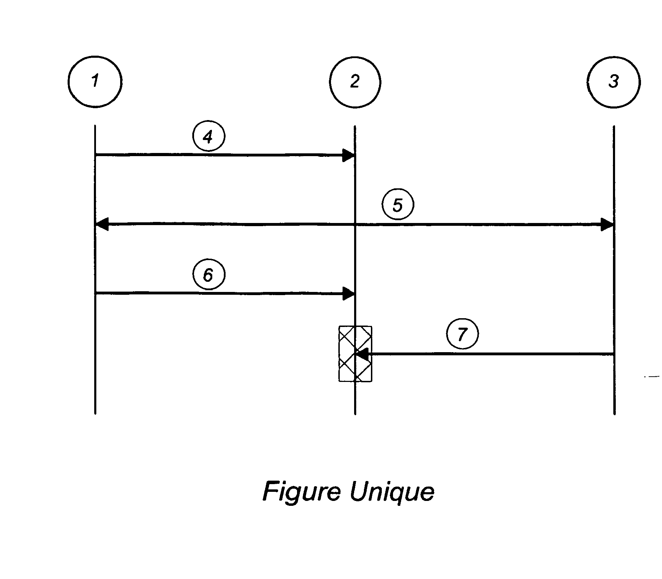

Figure 1 represents a diagram illustrating one embodiment of switching of a client terminal from an idle mode to an active mode according to the present invention.

According to one embodiment of the invention, a client terminal 1 sends and receives a stream 5 through a network 2 when it is in active mode 4.

The network 2 forwards to this terminal 1 information or stream or traffic 5 which it receives from a provider 3, such as a distant service provider, an application or another distant terminal.

In the following embodiment, description is made of a stream 5 sent by a distant service provider 3 to a client terminal 1. For example, the stream 5 could concerns a voice call, a message (SMS) or an IP stream.

When a client does not use his terminal 1, it enters into idle mode 6 to decrease its power consumption in order to save its battery.

Usually, a network forwards an end-to-end stream, for example, from a distant service provider to a client terminal, said forwarding of stream switching the client terminal into an active mode for every received stream.

The invention proposes a method for switching a client terminal 3 from an idle mode 6 to an active mode 4 depending on the information attached to stream 5 qualifying its degree of importance, to optimize its battery lifetime.

This method enables the recognition of said information attached by service provider 3 to stream 5 based on which the network can decide whether to switch or not 7 the client terminal 1 from an idle mode 6 to an active mode 4.

Firstly, the method enables to provide indication means by the distant service provider 3. Thus, an indication mean such as an activation flag or tag can be inserted in a stream 5 in order to indicate the activation policy according to the type of stream and/or its level of priority.

The activation flag is inserted by the distant service provider 3 in order to indicate to the network 2 the desired activation policy, said activation policy consisting in, for example, whether the client terminal 1 will be switched 7 or not from an idle mode 6 to an active mode 4.

According to one embodiment, if the distant service provider 3 wants the client terminal 1 to receive a specific type of stream 5, it will insert an activation flag indicating to the network 2 that the client terminal must be switched from idle mode 6 to active mode 4 for said stream 5.

According to another embodiment which can be combined with the previous embodiment, the distant service provider 3 can insert an activation flag indicating to the network 2 that the stream 5 has a high level of priority to make sure that the client terminal 1 is switched from idle mode 6 to active mode 4 in order to receive said stream.

The distant service provider 3 can insert different types of activation flags for ranking stream 5 as regards the level of granularity, the degree of importance, or the type of stream, in order to use said activation flags in an optimal manner.

Moreover, an activation flag can be inserted in the packet header. For instance, the activation flag can be inserted in an IP header or in an Ethernet header.

Additionally, the activation flag can indicate the level of priority by means of a binary value or a level of granularity.

For instance, the binary value can be "switch or don't switch", or "1 or 0" and the level of granularity can be "don't switch and send a return message indicating that the client terminal is in idle mode".

The network 2 comprises detection means in order to detect the activation policy indicated in the activation flag.

The activation policy regarding the type of stream and/or the level of priority of streams which must determine the switching or not 7 of the client terminal 1 is determined beforehand by the distant service provider 3 or said client terminal.

When network 2 receives stream 5, it verifies first the mode of the client terminal 1 and:
- if the client terminal 1 is in active mode 4, the stream 5 is directly sent by network 2 to said client terminal;
- If the client terminal is in idle mode 6, the network 2 uses detection means to detect the activation flag of said stream 5 in order to identify the activation policy.

Several scenarios are possible, when the client terminal 1 is in idle mode 6 and a stream 5 arrives on the network 2 with a given activation flag.

For example, when network 2 receives from a distant service provider or from another client terminal 3 a stream 5 which is a voice call, said stream has an activation flag indicating a high level of priority.

With such a high level of priority, the client terminal 1 is always switched by the network 2 in active mode 6. In addition, a return message can be delivered by the network 2 to the client terminal 1 to indicate its activation.

According to a second example, network 2 receives a stream 5 with an activation flag indicating a low level of priority.

This is the case, for example, with SMS advertising or other types of advertising well known.

In that second example, different cases can be considered according to the indication of the activation flag.

In a first case, the stream 5 is considered as undesired. Then, said stream is not delivered to the client terminal 1 which is therefore not switched in active mode 4. Undesired streams are, for example, streams with a ping-like mechanism.

The distant service provider 3 then can receive a return message indicating that the client terminal 1 is in idle mode and that the network 2 does not switch the client terminal 1 in active mode 4 and discards the stream 5.

In addition, the activation flag can further indicate to the network 2 that it must alert the provider 3 when the client terminal 1 becomes in active mode, notably to resend the stream 5.

In other cases, the stream 5 is not considered as undesired but the activation flag of said stream has a level of priority too low to be delivered to the client terminal 1 in idle mode. For example, the stream 5 can concern the download of software upgrades and/or patches.

In those cases, the activation flag can indicate to the network 2 that it can buffer the stream 5 when the client is in idle mode. In one case, the stream 5 can be delivered only upon activation of the client terminal 1.

In another case, the activation flag further indicates a latency period for buffering. In this way, the stream 5 can be delivered to the client terminal 1 after the latency period, whatever the mode of the client terminal 1. Alternatively, the stream 5 can be delivered to the client terminal 1 at any time before the latency period expires, whatever the mode of the client terminal 1.

For example, the activation flag may indicate that the received packet belonging to stream 5 can be buffered during a period which does not exceed a given length (60 seconds for example) inside the network 2. Before such period expires, the client terminal 1 must be activated and the packet must be delivered. In addition, if the network can't deliver the packet within the period, it can send a return message to notify the provider 3 of such problem. Then, the packet can still be delivered in a best effort way or can be discarded.

In addition, the activation flag can indicate the maximum time necessary for delivering the stream 5 to the client terminal 1, depending on the real-time requirements of said stream.

For example, it requires up to a few minutes for the network 2 to receive a stream 5 of contact-list update before sending it to the client terminal 1.

Such a type of activation policy in the activation flag enables to wait until the end of the maximum time indicated before sending all of the streams currently buffered in the network 2. All of those streams 5 are then sent to the client terminal 1 at the same time, which enables to optimize the switching of the client terminal 1 in active mode 4.

One of the advantages of this invention is that it works with all types of distant service providers, networks, streams and technologies.

## Claims

1. Method for switching a wireless client terminal (1) from an idle mode (6) to an active mode (4), wherein a provider (3) sends a stream (5) of uses data packets through a network (2) to said client terminal, an activation flag being inserted in the packet header of the stream (5) by the provider (3) according to the stream, and upon sending of the flagged stream (5) through the network (2), said network verifying for the mode of the client (1) terminal and, if it is in idle mode, the terminal (1) being switched (7) by the network (2) in active mode (4) depending on the activation flag.

2. Method of claim 1, **characterized in that** the activation flag depends on the type of stream (5) and its priority level.

3. Method of claim 2, **characterized in that** the packet header of the stream (5) is an IP header or an Ethernet header.

4. Method of claim 3, **characterized in that** the activation flag is a binary value.

5. Method of claim 3, **characterized in that** the activation flag is a level of granularity.

6. Method of claim 1 to 5, **characterized in that** the activation flag is recognized by detection means of the network (2) and it is used to select a given activation policy.

7. Method of claim 1 to 6, **characterized in that** the activation flag indicates to the network (2) that it must discard the stream (5) when the client terminal (1) is in idle mode.

8. Method of claim 7, **characterized in that** the activation flag further indicates to the network (2) that it must alert the provider (3) when the client terminal (1) becomes in active mode.

9. Method of claim 1 to 6, **characterized in that** the activation flag indicates to the network (2) that it can buffer the stream (5) when the client terminal (1) is in idle mode.

10. Method of claim 9, **characterized in that** the stream (5) is delivered to the client terminal (1) upon activation of said terminal.

11. Method of claim 9, **characterized in that** the activation flag further indicates a latency period for buffering.

12. Method of claim 1 to 11, **characterized in that** the network (2) delivers a return message to the provider (3) to indicate the mode of the client terminal (1).

## Patentansprüche

1. Verfahren zum Umschalten eines drahtlosen Client-Endgeräts (1) von einem Idle-Modus (6) in einen aktiven Modus (4), wobei ein Anbieter (3) einen Strom (5) von Benutzerdatenpaketen durch ein Netzwerk (2) an das besagte Client-Endgerät sendet, wobei von dem Anbieter (3) dem Strom entsprechend ein Aktivierungs-Flag in den Paket-Kopfteil des Stroms (5) eingefügt wird, und wobei das besagte Netzwerk nach Senden des mit dem Flag gekennzeichneten Stroms (5) durch das Netzwerk (2) den Modus des Client-Endgeräts (1) überprüft und das Endgerät (1), wenn es sich im Idle-Modus befindet, entsprechend dem Aktivierungs-Flag vom Netzwerk (2) in den aktiven Modus (4) geschaltet wird.

2. Verfahren nach Anspruch 1, **dadurch gekennzeichnet, dass** das Aktivierungs-Flag vom Typ des Stroms (5) und dessen Prioritätsstufe abhängt.

3. Verfahren nach Anspruch 2, **dadurch gekennzeichnet, dass** der Paketkopfteil des Stroms (5) ein IP-Kopfteil oder ein Ethernet-Kopfteil ist.

4. Verfahren nach Anspruch 3, **dadurch gekennzeichnet, dass** das Aktivierungs-Flag ein Binärwert ist.

5. Verfahren nach Anspruch 3, **dadurch gekennzeichnet, dass** das Aktivierungs-Flag ein Granularitätsgrad ist.

6. Verfahren nach Anspruch 1 bis 5, **dadurch gekennzeichnet, dass** das Aktivierungs-Flag von Detektionsmitteln des Netzwerks (2) erkannt und dazu verwendet wird, eine gegebene Aktivierungsrichtlinie auszuwählen.

7. Verfahren nach Anspruch 1 bis 6, **dadurch gekennzeichnet, dass** das Aktivierungs-Flag dem Netzwerk (2) signalisiert, dass es den Strom (5) verwerfen muss, wenn sich das Client-Endgerät (1) im Idle-Modus befindet.

8. Verfahren nach Anspruch 7, **dadurch gekennzeichnet, dass** das Aktivierungs-Flag dem Netzwerk (2) weiterhin angibt, dass es den Anbieter (3) warnen muss, wenn das Client-Endgerät (1) in den aktiven Modus übergeht.

9. Verfahren nach Anspruch 1 bis 6, **dadurch gekennzeichnet, dass** das Aktivierungs-Flag dem Netzwerk (2) angibt, dass es den Strom (5) zwischenspeichern kann, wenn sich das Client-Endgerät (1) im Idle-Modus befindet.

10. Verfahren nach Anspruch 9, **dadurch gekennzeichnet, dass** der Strom (5) an das Client-Endgerät (1) geliefert wird, nachdem das besagte Endgerät aktiviert wurde.

11. Verfahren nach Anspruch 9, **dadurch gekennzeichnet, dass** das Aktivierungs-Flag weiterhin eine Latenzzeit für die Zwischenspeicherung angibt.

12. Verfahren nach Anspruch 1 bis 11, **dadurch gekennzeichnet, dass** das Netzwerk (2) dem Anbieter (3) eine Rückmeldung zustellt, um den Modus des Client-Endgeräts (1) anzugeben.

## Revendications

1. Procédé pour commuter un terminal client sans fil (1) d'un mode de veille (6) en un mode actif (4), dans lequel un fournisseur (3) envoie un flux (5) de paquets de données utiles à travers un réseau (2) vers ledit terminal client, un marqueur d'activation étant inséré dans l'en-tête du paquet du flux (5) par le fournisseur (3) en fonction du flux et, lors de l'envoi du flux marqué (5) à travers le réseau (2), ledit réseau vérifiant le mode du terminal client (1) et, s'il se trouve en mode de veille, le terminal (1) étant commuté (7) par le réseau (2) en mode actif (4) en fonction du marqueur d'activation.

2. Procédé selon la revendication 1, **caractérisé en ce que** le marqueur d'activation dépend du type de flux (5) et de son niveau de priorité.

3. Procédé selon la revendication 2, **caractérisé en ce que** l'en-tête de paquet du flux (5) est un en-tête IP ou un en-tête Ethernet.

4. Procédé selon la revendication 3, **caractérisé en ce que** le marqueur d'activation est une valeur binaire.

5. Procédé selon la revendication 3, **caractérisé en ce que** le marqueur d'activation est un niveau de granularité.

6. Procédé selon les revendications 1 à 5, **caractérisé en ce que** le marqueur d'activation est reconnu par les moyens de détection du réseau (2) et il est utilisé pour sélectionner une politique d'activation donnée.

7. Procédé selon les revendications 1 à 6, **caractérisé en ce que** le marqueur d'activation indique au réseau (2) qu'il doit rejeter le flux (5) lorsque le terminal client (1) se trouve en mode de veille.

8. Procédé selon la revendication 7, **caractérisé en ce que** le marqueur d'activation indique en outre au réseau (2) qu'il doit alerter le fournisseur (3) lorsque le terminal client (1) passe en mode actif.

9. Procédé selon les revendications 1 à 6, **caractérisé en ce que** le marqueur d'activation indique au réseau (2) qu'il peut mettre le flux (5) en tampon lorsque le terminal client (1) se trouve en mode de veille.

10. Procédé selon la revendication 9, **caractérisé en ce que** le flux (5) est délivré au terminal client (1) sur activation dudit terminal.

11. Procédé selon la revendication 9, **caractérisé en ce que** le marqueur d'activation indique en outre une période de latence pour la mise en tampon.

12. Procédé selon les revendications 1 à 11, **caractérisé en ce que** le réseau (2) délivre un message de retour au fournisseur (3) pour indiquer le mode du terminal client (1).
